# EUROPÄISCHE PATENTANMELDUNG

(11) **EP 4 785 783 A1**
(43) Veröffentlichungstag der Anmeldung: **05.08.2026**
(21) Anmeldenummer: 26150527.5
(22) Anmeldetag: 07.01.2026
(51) Int. Cl.: A01K 5/00

(54) **FUTTERMISCHER MIT AUTOMATISCHEM GETRIEBE FÜR MISCHWERKZEUG**

(30) Priorität: 07.01.2025 DE 102025100324
(71) Anmelder: Maschinenfabrik Bernard van Lengerich GmbH & Co. KG, 48488 Emsbüren (DE)
(72) Erfinder: Pfeiffer, Dominic, 48485 Neuenkirchen (DE); Diekamp, Raimund, 48499 Salzbergen (DE)
(74) Vertreter: Völler-Blumenroth, Johannes Florian

(57) **Zusammenfassung**

Die Erfindung betrifft einen Futtermischer (2) mit einem Mischbehälter (4) zur Aufnahme von Futter, wenigstens einem im Mischbehälter (4) drehend angeordneten Mischwerkzeug (6), einer Antriebseinrichtung (8) zum Antreiben des Mischwerkzeugs (6), die ein automatisch schaltbares Getriebe (10) mit einer ersten Übersetzungsstufe (200) mit einem hohen Übersetzungsverhältnis und wenigstens einer zweiten Übersetzungsstufe (300) mit einem niedrigeren Übersetzungsverhältnis als die erste Übersetzungsstufe (200) umfasst, wobei das Getriebe (10) als Lastschaltgetriebe ausgebildet ist, sowie mit einer Steuereinrichtung zum Schalten des Getriebes (10), wobei die Steuereinrichtung eingerichtet ist, das Getriebes (10) nach Ablauf einer vorgegebenen oder vorgebbaren Zeitspanne zu schalten.

## Beschreibung

Die vorliegende Erfindung betrifft einen Futtermischer nach dem Oberbegriff des Anspruchs 1 sowie ein Verfahren zum Betreiben eines Futtermischers gemäß Anspruch 11.

Futtermischer insbesondere in der Form von Futtermischwagen werden in landwirtschaftlichen Betrieben zum Mischen und Verteilen von Viehfutter verwendet.

Die Futtermischer weisen hierzu einen Mischbehälter auf, in den die einzelnen Komponenten des zu mischenden Futters eingebracht werden. In dem Mischbehälter ist zumindest ein Mischwerkzeug angeordnet. Bei dem Mischwerkzeug kann es sich um eine horizontal oder vertikal im Mischbehälter angeordnete Mischschnecke handeln. Der Futtermischer umfasst eine Antriebseinrichtung zum Antreiben des Mischwerkzeugs. Die Antriebseinrichtung umfasst ein automatisch schaltbares Getriebe mit einer ersten Übersetzungsstufe mit einem hohen Übersetzungsverhältnis und wenigstens einer zweiten Übersetzungsstufe mit einem niedrigeren Übersetzungsverhältnis als die erste Übersetzungsstufe. Das Getriebe ist als Lastschaltgetriebe ausgebildet. Lastschaltgetriebe sind Getriebe, die unter Last geschaltet werden können. Ferner umfasst der Futtermischer eine Steuereinrichtung zum Schalten des Getriebes. Derartige Futtermischer sind bekannt. Die Antriebseinrichtung ist mit einem Motor verbunden. Dieser stellt Energie für das Drehen des Mischwerkzeugs bereit. Bei als Futtermischwagen ausgebildeten Futtermischern ist die Antriebseinrichtung über eine Zapfwelle mit einer Zapfstelle eines landwirtschaftlichen Nutzfahrzeugs, eines Schleppers, verbunden.

Alternativ kann ein solcher Futtermischer als Selbstfahrer ausgebildet sein. Die Antriebseinrichtung wird dann von einem Motor des Selbstfahrers angetrieben. Hierbei kann es sich um einen dezidierten Hydraulikmotor handeln. Die Antriebseinrichtung kann auch mit dem Motor eines Fahrantriebs des Selbstfahrers verbunden sein.

Je nach Dichte des Futters und/oder Beladung des Mischbehälters kann das zum Drehen des Mischwerkzeugs erforderliche Drehmoment variieren. Über das schaltbare Getriebe mit zumindest zwei Übersetzungsstufen kann hierauf leicht reagiert werden.

So kann bei einem bereits beladenen Mischbehälter das Mischwerkzeug zunächst mit dem Getriebe in einer Übersetzungsstufe mit hohem Übersetzungsverhältnis langsam in Bewegung gesetzt werden.

Hierbei erfolgt eine Mischung und Auflockerung des Futters im Mischbehälter. Wenn das Futter soweit gelockert ist, dass das für das Drehen des Mischwerkzeugs erforderliche Drehmoment gesunken ist, kann das Getriebe in eine andere Übersetzungsstufe mit einem niedrigeren Übersetzungsverhältnis geschaltet werden. Das Mischwerkzeug dreht dann schneller und es erfolgt eine intensivere Durchmischung des in dem Mischbehälter angeordneten Futters. Bei einem höheren Übersetzungsverhältnis dreht das Mischwerkzeug langsamer, das Drehmoment wird um den Faktor der Getriebeübersetzung gesteigert.

Das Übersetzungsverhältnis ist dabei das Verhältnis der Drehzahl am Eingang des Getriebes zu der Drehzahl am Ausgang des Getriebes. Der Eingang des Getriebes ist dabei mit dem Motor verbunden und der Ausgang des Getriebes mit dem Mischwerkzeug. Bezogen auf die Drehmomente beschreibt es das Verhältnis des Drehmoments am Ausgang des Getriebes zum Drehmoment am Eingang des Getriebes.

Bei vorbekannten Futtermischern werden die Schaltvorgänge dabei grundsätzlich durch einen Bediener des Futtermischers ausgelöst. Derartige Futtermischer erfordern einen erfahrenden, zumindest jedoch eingehend eingewiesenen Bediener, der zudem eine entsprechende Aufmerksamkeit an den Tag legen muss.

So steigt während eines Beladens des Mischbehälters mit Futterbestandteilen, die von dem Mischwerkzeug miteinander vermischt werden sollen, dass für das Drehen des Mischwerkzeugs notwendige Drehmoment. Wenn das für das Drehen des Mischwerkzeugs mit der aktuellen Drehzahl benötigte Drehmoment das von dem Motor bereitstellbare Drehmoment überschreitet, ist das Getriebe in eine Übersetzungsstufe mit einem höheren Übersetzungsverhältnis zu schalten. Hierdurch kann am Mischwerkzeug ein höheres Drehmoment bereitgestellt werden, so dass eine fortgesetzte Durchmischung des Futters im Mischbehälter erfolgen kann.

Zur Entlastung des Bedieners der Futtermischer ist bei vorbekannten Futtermischern die Antriebseinrichtung mit zumindest einem Drehzahl- oder Drehmomentsensor verbunden, über den die Drehzahl bzw. das Drehmoment an zumindest einem Punkt der Antriebseinrichtung gemessen wird. Durch einen Drehmomentsensor kann ein Anstieg des für das Drehen des Mischwerkzeugs benötigten Drehmoments direkt gemessen werden. Ein Drehzahlsensor kann den Anstieg des benötigten Drehmoments durch einen Abfall der Drehzahl indirekt feststellen. Die Steuereinrichtung ist dabei ausgebildet, das Getriebe in eine andere Übersetzungsstufe zu schalten, wenn das vom Drehmomentsensor gemessene Drehmoment einen vorgegebenen Grenzwert erreicht oder überschreitet bzw. die vom Drehzahlsensor gemessene Drehzahl einen vorgegebenen Grenzwert erreicht oder unterschreitet.

Aufgabe der vorliegenden Erfindung ist es, einen Futtermischer bereitzustellen, der einen geringeren Einweisungsaufwand für einen Bediener erfordert bzw. von Bedienern mit weniger Erfahrung zuverlässig bedient werden kann, indem er den Bediener weiter entlastet.

Erfindungsgemäß wird die Aufgabe dadurch gelöst, dass die Steuereinrichtung eingerichtet ist, das Getriebe zeitabhängig zu schalten. So kann für einen bestimmten Beladungsvorgang, bei dem gemäß einem bestimmten Rezept nacheinander unterschiedliche Komponenten in den Mischbehälter eingebracht und durchmischt werden, vorgegeben werden, wann das Getriebe geschaltet werden soll. Der Bediener des Futtermischers muss die Schaltvorgänge dann nicht mehr selber auslösen und wird hierdurch entlastet.

Bevorzugt umfasst der Futtermischer eine mit der Steuereinheit verbundene Bedieneinheit. Diese Bedieneinheit weist insbesondere Wahltaster für die verschiedenen Übersetzungsstufen des Getriebes und/oder für die Eingabe bestimmter Zeiten auf. Ein Bediener des Futtermischers kann über diese Bedieneinheit eine bestimmte Übersetzungsstufe anfordern und/oder der Steuereinheit mitteilen, wie lange das Getriebe in der bestimmten Übersetzungsstufe verbleiben soll, bis das Getriebe in eine andere Übersetzungsstufe geschaltet werden soll. Über eine solche Bedieneinheit kann ein Bediener des Futtermischers der Steuereinheit ein bestimmtes Mischprogramm vorgeben, also festlegen, wie lange das Mischwerkzeug von dem Getriebe mit einer bestimmten Übersetzungsstufe angetrieben werden soll.

Besonders bevorzugt kann der Bediener über die Bedieneinheit Schalteingaben an die Steuereinheit übermitteln, wobei die Steuereinheit eingerichtet ist, auf eine solche Schalteingabe das Getriebe auch vor Ablauf der vorgegebenen bzw. vorgebbaren Zeitspanne in ein andere Übersetzungsstufe zu schalten. In diesem Fall kann der Bediener des Futtermischers von der Zeitspanne abweichen. Der Bediener kann so abweichend von den Vorgaben die Kontrolle über die Schaltvorgänge des Getriebes übernehmen.

Vorzugsweise umfasst das Getriebe eine dritte Übersetzungsstufe. Die erste, zweite und dritte Übersetzungsstufe weisen dabei aufsteigende bzw. absteigende Übersetzungsverhältnisse auf. Die Steuereinrichtung ist eingerichtet, das Getriebe gemäß einem vorgegebenen oder vorgebbaren Mischprogramm zeitabhängig zwischen den verschiedenen Übersetzungsstufen zu schalten. Der Bediener des Futtermischers wird hierdurch entlastet.

So kann ein Mischprogramm geplant werden, bei dem das Mischwerkzeug zunächst mit dem Getriebe in der ersten Übersetzungsstufe betrieben wird. Nach Ablauf einer gewissen, vorgewählten oder vorgegebenen Zeitspanne wird das Getriebe in die zweite Übersetzungsstufe geschaltet. Nach Ablauf einer zweiten, vorgewählten oder vorgegebenen Zeitspanne wird das Getriebe in die dritte Übersetzungsstufe geschaltet.

Über ein solches, zeitgesteuertes Programm kann insbesondere eine Durchmischung des Futters bei bereits teilweise oder vollständig gefülltem Mischbehälter erfolgen. Zunächst wird das Mischwerkzeug mit dem Getriebe in der ersten Übersetzungsstufe mit hohem Übersetzungsverhältnis mit niedriger Geschwindigkeit aber hohem Drehmoment in Bewegung versetzt. Das Futter beginnt sich aufzulockern, wodurch das zum Drehen des Mischwerkzeugs benötigte Drehmoment sinkt. Das Getriebe kann anschließend in die zweite und dann die dritte Übersetzungsstufe geschaltet werden, wobei das Mischwerkzeug nach jedem Schaltvorgang schneller dreht und eine intensivere Durchmischung des im Mischbehälter angeordneten Futters bewirkt.

Zum Beladen des Futtermischers bei leerem Mischbehälter kann ein zeitgesteuertes Programm verwendet werden, bei dem der Futtermischer zunächst mit dem Getriebe in der dritten Übersetzungsstufe mit niedrigem Übersetzungsverhältnis bei niedriger Drehmoment und hoher Drehzahl betrieben wird, um das Futter zügig zu durchmischen. Wenn bei zunehmender Beladung des Mischbehälters das zum Durchmischen des Futters mit dem Mischwerkzeug benötigte Drehmoment ansteigt, kann das Getriebe in die zweite und anschließend in die erste Übersetzungsstufe mit jeweils höherem Übersetzungsverhältnis geschaltet werden. Die Drehzahl des Mischwerkzeugs sinkt und das Drehmoment, das vom Mischwerkzeug aufgebracht werden kann, steigt.

Vorzugweise weist die Antriebseinrichtung zumindest einen Drehzahlsensor oder einen Drehmomentsensor auf. Die Steuereinrichtung des Futtermischers ist eingerichtet, das Getriebe unabhängig von der vorgegebenen oder vorgebbaren Zeitspanne in Abhängigkeit von der vom Drehzahlsensor erfassten Drehzahl bzw. des vom Drehmomentsensors erfassten Drehmoments in ein höheres oder niedriges Übersetzungsverhältnis zu schalten, sofern dies vorhanden ist.

Die Drehzahl eines Elements der Antriebseinrichtung ist dabei im Vergleich zur Bestimmung eines Drehmoments regelmäßig mit geringerem Aufwand bestimmbar. Über einen Drehmomentsensor wird das Drehmoment direkt ermittelt. Über den Drehzahlsensor kann das Drehmoment indirekt bestimmt werden. Wenn das Mischwerkzeug ein Drehmoment benötigt, das größer ist als das Drehmoment, das der Motor zum Antrieb der Antriebseinrichtung unter Beibehaltung der Übersetzungsstufe des Getriebes bereitstellen kann, kommt es zu einem Abfall der Drehzahl in der Antriebseinrichtung. Dieser Drehzahlabfall kann von dem Drehzahlsensor einfach erfasst werden.

Die Steuereinrichtung ist ausgebildet, das Getriebe wenn möglich in eine Übersetzungsstufe zu schalten, die ein höheres Übersetzungsverhältnis aufweist, wenn ein Anstieg des Drehmoments bzw. ein Abfall der Drehzahl für einen vorbestimmten Zeitraum einen vorbestimmten Betrag überschreitet.

Umgekehrt kann die Drehzahl ansteigen, wenn sich das zum Drehen des Mischelements benötigte Drehmoment verringert. Dies kann der Fall sein, wenn eine zunächst stark verdichtete Futterkomponente im Mischbehälter durch das Mischwerkzeug aufgelockert oder der Mischbehälter zumindest teilweise entleert wurde. Der Drehmomentsensor registriert dann eine steigende Drehzahl und ein Drehmomentsensor ein sinkendes Drehmoment, woraufhin die Steuereinrichtung das Getriebe, wenn möglich, in eine Übersetzungsstufe mit einer niedrigeren Übersetzung schaltet.

Voraussetzung ist dabei jeweils, das ausgehend von der aktuellen Übersetzungsstufe im Getriebe jeweils eine Übersetzungsstufe mit einer niedrigeren bzw. einer höheren Übersetzung zur Verfügung steht.

In diesem Fall kann ein Mischprogramm bereitgestellt werden, bei dem der Futtermischer beim Befüllen des Mischbehälters mit den einzelnen Komponenten des zu mischenden Futters für eine vorgegebene oder vorgebbare Zeitspanne zunächst mit dem Getriebe in der zweiten, mittleren Übersetzungsstufe betrieben wird. Ausgehend von dieser Übersetzungsstufe kann die Steuereinrichtung dann das Getriebe in Abhängigkeit der vom Drehzahlsensor aufgenommenen Drehzahl falls notwendig in die erste oder die dritte Übersetzungsstufe mit einem entsprechend höheren oder entsprechend niedrigeren Übersetzungsverhältnis schalten, auch wenn die Zeitspanne noch nicht abgelaufen ist. Wenn die Zeitspanne abgelaufen ist, ohne dass es ein Schalten aufgrund von Änderungen der Drehzahl bzw. des Drehmoments notwendig wurde, wird das Getriebe gemäß Mischprogramm geschaltet.

Vorzugsweise umfasst das Getriebe einen Neutralgang. Der Neutralgang ist dadurch definiert, dass das Mischwerkzeug von dem Motor abgekoppelt ist und somit unabhängig vom Betriebszustand des Motors nicht angetrieben wird, wenn das Getriebe in den Neutralgang geschaltet ist.

Besonders vorzugsweise ist die Steuereinrichtung eingerichtet, das Getriebe nach Ablauf einer vorgegebenen maximalen Mischzeit in den Neutralgang zu schalten.

Die maximale Mischzeit ist dabei so bemessen, dass nach Ablauf der maximalen Mischzeit das Futter ausreichend gemischt vorliegt. Nach Ablauf der maximalen Mischzeit wird das Mischwerkzeug dann automatisch nicht länger angetrieben. Das im Mischbehälter angeordnete Futter wird nicht länger bewegt und daher geschont. Vor allem wird jedoch automatisch ein unnötiger Energieverbrauch durch ein weiteres Mischen des Futters verhindert.

Ein Bediener eines entsprechenden Futtermischers wird von der Aufgabe entlastet, das Ende der Mischzeit festzustellen und das Mischwerkzeug manuell abzuschalten. Insbesondere erfolgt das Abschalten des Mischwerkzeugs automatisch auch dann, wenn ein Bediener des Futtermischers diesen zwischenzeitlich unbeaufsichtigt lassen sollte. Die Bedienung eines solchen Futtermischers ist hierdurch vereinfacht.

Insbesondere ist die Steuereinrichtung eingerichtet, das Getriebe in den Neutralgang zu schalten, wenn ein Drehmomentanstieg bzw. ein Drehzahlabfall registriert wird, während das Getriebe bereits in die erste Übersetzungsstufe, die Stufe mit dem höchsten Übersetzungsverhältnis, geschaltet ist und somit keine Übersetzungsstufe mit einem höheren Übersetzungsverhältnis mehr zur Verfügung steht. Hierdurch können andernfalls möglich Beschädigungen an dem Futtermischer und/oder an dem Motor zum Antrieb der Antriebseinrichtung vermieden werden. Der Bediener des Futtermischers wird weiter entlastet.

Bevorzugt ist das Getriebe als ein Stirnradgetriebe mit hydraulisch schaltbaren Lamellenkupplungen ausgebildet. Durch Druckbeaufschlagung der einzelnen Lamellenkupplungen wird das Getriebe zwischen den unterschiedlichen Übersetzungsstufen umgeschaltet. Wenn die Lamellenkupplungen nicht mit Druck beaufschlagt sind, befindet sich das Getriebe in einer Neutralstellung, dem Neutralgang.

Ein solches hydraulisch bzw. elektrohydraulisch geschaltetes Getriebe kann mit weiteren Sensoren versehen sein, die insbesondere den Druck und/oder die Temperatur einer hydraulischen Flüssigkeit, mit der die Lamellenkupplungen mit Druck beaufschlagt werden, überwachen. Diese Sensoren sind vorzugsweise ebenfalls mit der Steuereinrichtung verbunden. Wenn der Druck unter ein definiertes Niveau abfällt oder über ein definiertes Niveau steigt, ist die Steuereinrichtung eingerichtet, ein Umschalten in eine andere Übersetzungsstufe zu verhindern. Die Steuereinrichtung schaltet das Getriebe stattdessen in den Neutralgang. Durch eine solche Überwachung wird die Betriebssicherheit des Futtermischers erhöht und sonst mögliche Beschädigungen werden vermieden.

Die Temperatur der Hydraulikflüssigkeit hat einen Einfluss auf die Viskosität der Hydraulikflüssigkeit, die wiederum die Schaltzeiten der Lamellenkupplungen beeinflusst. Die Steuereinrichtung kann in Abhängigkeit der gemessenen Temperatur der Hydraulikflüssigkeit und der zu dieser Temperatur korrespondierenden Viskosität die Schaltzeiten innerhalb vorgegebener Parameter anpassen.

Wenn die Temperatur einen vorgegebenen unteren Grenzwert unterschreitet oder einen vorgegebenen oberen Grenzwert überschreitet, schaltet die Steuereinrichtung das Getriebe in den Neutralgang. Durch eine solche Überwachung wird die Betriebssicherheit des Futtermischers erhöht und sonst mögliche Beschädigungen werden vermieden.

Weiterhin kann die Antriebseinrichtung mit zumindest zwei Drehzahlsensoren versehen sein, die so angeordnet sind, dass aus dem Vergleich der von den verschiedenen Drehzahlsensoren gemessenen Drehzahlen ein Schlupf in der Lamellenkupplung bestimmt werden kann. Der Vergleich kann durch Bildung der Verhältnisse der Drehzahlen oder durch Bildung einer Differenz der Drehzahlen erfolgen. Wenn dieser Schlupf einen bestimmen Grenzwert überschreitet, schaltet die Steuereinrichtung das Getriebe in den Neutralgang. Hierdurch werden ungewünschte Betriebszustände sowie etwaige Beschädigungen des Futtermischers vermieden. Der Futtermischer ist besonders langlebig.

Weiterhin ist ein Verfahren zum Mischen von Futter mit einem vorbeschriebenen Futtermischer Gegenstand der Erfindung. Hierbei wird das Mischwerkzeug über die Antriebseinrichtung in Drehung versetzt. Die Steuereinrichtung schaltet das Getriebe nach Ablauf der vorgegebenen oder vorgebbaren Zeitspanne.

Vorzugsweise schaltet die Steuereinrichtung das Getriebe automatisch auch während der vorgegebenen oder vorgebbaren Zeitspanne in eine andere Übersetzungsstufe, wenn die vom Drehzahlsensor erfassten Ist-Drehzahlen innerhalb der vorbestimmten Zeitraums um einen vorbestimmten Prozentsatz von der Arbeitsdrehzahl abweichen. Hierzu nimmt der Drehzahlsensor eine Anfangsdrehzahl auf, die als Arbeitsdrehzahl gespeichert wird. Anschließend wird der Mischbehälter des Futtermischers mit Futter beladen, wobei der Drehzahlsensor während der Beladung jeweils Ist-Drehzahlen aufnimmt. Die Ist-Drehzahlen werden jeweils mit der Anfangsdrehzahl verglichen. Die Steuereinrichtung schaltet das Getriebe automatisch in eine andere Übersetzungsstufe, wenn die Ist-Drehzahlen innerhalb vorbestimmten Zeitraums um einen vorbestimmten Prozentsatz von der anfangs gespeicherten Arbeitsdrehzahl abweichen.

Bevorzugt umfasst der Futtermischer ein Getriebe, das einen Neutralgang aufweist, wobei die Steuereinrichtung das Getriebe nach Ablauf einer voreingestellten bzw. voreinstellbaren maximalen Mischzeit in den Neutralgang schaltet. Durch das Schalten in den Neutralgang wird das Mischwerkzeug nicht länger angetrieben. Das Futter wird geschont und ein unnötiger Energieverbrauch für ein unnötiges Mischen wird vermieden.

Vorzugsweise umfasst der Futtermischer zumindest einen weiteren, an der Antriebseinrichtung angeordneten Drehzahlsensor, der angeordnet ist, einen Schlupf einer Lamellenkupplung zu erkennen, und/oder einen Drucksensor und/oder einen Temperatursensor, wobei der Drucksensor ausgebildet ist, einen Druck einer Hydraulikflüssigkeit aufzunehmen, und der Temperatursensor ausgebildet ist, eine Temperatur einer Hydraulikflüssigkeit aufzunehmen. Die Steuereinrichtung schaltet das Getriebe in den Neutralgang, wenn das Verhältnis und/oder die Differenz der vom Drehzahlsensor aufgenommenen Drehzahl und der vom weiteren Drehzahlsensor aufgenommenen Drehzahl und/oder der vom Drucksensor aufgenommene Druck der Hydraulikflüssigkeit und/oder die vom Temperatursensor aufgenommene Temperatur der Hydraulikflüssigkeit einen vorgegebenen Maximalwert überschreitet und/oder einen vorgegebenen Minimalwert unterschreitet.

Dadurch, dass die Steuereinrichtung das Getriebe automatisch in den Neutralgang schaltet, wenn jeweils ein vorgegebener Maximalwert überschritten oder ein vorgegebener Minimalwert unterschritten wird, werden unerwünschte Betriebszustände des Futtermischers verhindert und die Lebensdauer des Futtermischers erhöht.

Weitere Vorteile und Einzelheiten sind der nachfolgenden Figurenbeschreibung zu entnehmen. Es zeigen auf schematische Weise:
- Fig. 1: eine Abbildung eines erfindungsgemäßen Futtermischers;
- Fig. 2: ein Ablaufdiagramm ausgehend von dem Getriebe im Neutralgang;
- Fig. 3: ein Ablaufdiagramm ausgehend von dem Getriebe in der ersten Übersetzungsstufe;
- Fig. 4: ein Ablaufdiagramm ausgehend von dem Getriebe in der zweiten Übersetzungsstufe;
- Fig. 5: ein Ablaufdiagramm ausgehend von dem Getriebe in der dritten Übersetzungsstufe.

Gleich oder ähnlich wirkende Teile sind, sofern dienlich, mit identischen Bezugsziffern versehen. Einzelne technische Merkmale der nachfolgend beschriebenen Ausführungsbeispiele können mit den Merkmalen der unabhängigen Ansprüche sowie mit den Merkmalen einzelner vorbeschriebener Ausführungsbeispiele zu erfindungsgemäßen Gegenständen kombiniert werden.

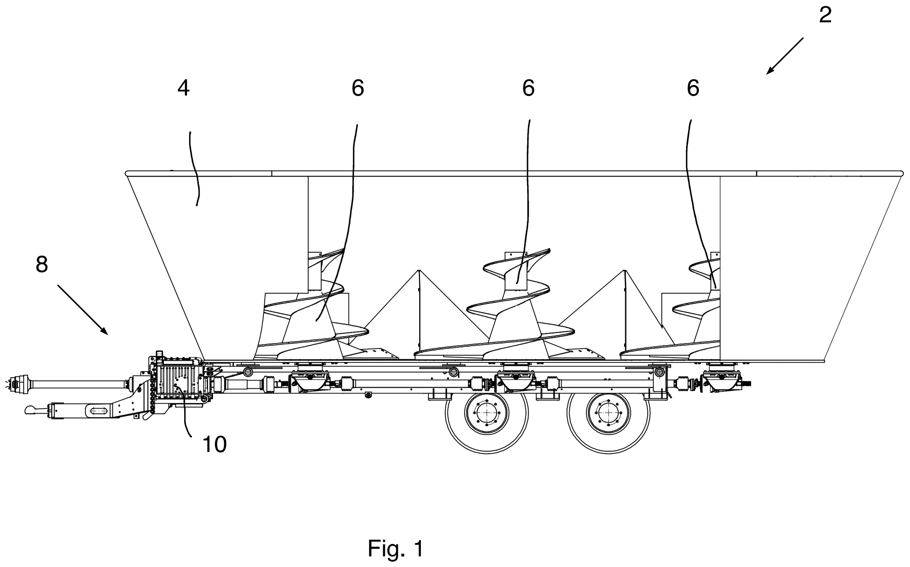

Fig. 1 zeigt einen Futtermischer 2 mit einem Mischbehälter 4. In dem Mischbehälter 4 sind im dargestellten Ausführungsbeispiel drei Mischwerkzeuge 6 dargestellt. Die Mischwerkzeuge 6 sind als vertikal angeordnete Mischschnecken ausgebildet. Die Mischwerkzeuge 6 sind gemeinsam über eine Antriebseinrichtung 8 antreibbar. Die Antriebseinrichtung 8 ist unterhalb des Mischbehälter 4 angeordnet und umfasst ein Getriebe 10. Dieses Getriebe 10 ist vorliegend als Lastschaltgetriebe ausgebildet.

Im dargestellten Ausführungsbeispiel ist der Futtermischer 2 so ausgebildet, dass er an ein Zugfahrzeug, insbesondere einen landwirtschaftlichen Schlepper, angehängt werden kann. Hierfür weist der Futtermischer 2 auf der in Fig. 1 linken Seite eine Deichsel auf. Zudem ist in Fig. 1 eine Zapfwelle dargestellt, mit der der Futtermischer 2 mit einer Zapfstelle des landwirtschaftlichen Nutzfahrzeugs verbunden werden kann. Über diese Zapfstelle stellt das landwirtschaftliche Nutzfahrzeug die Energie zum Antreiben der Mischwerkzeuge 6 bereit.

Der Futtermischer 2 kann alternativ auch als Selbstfahrer ausgebildet sein, wobei der Futtermischer 2 dann auch einen Fahrantrieb zur Fortbewegung des Futtermischers 2 aufweist. Zudem weist der Futtermischer 2 einen Motor zum Antreiben der Antriebseinrichtung 8 auf. Hierbei kann es sich um den Motor des Fahrantriebs des Futtermischers 2 handeln. Alternativ kann es sich um einen hiervon separaten Motor handeln, der insbesondere als Hydraulikmotor ausgebildet sein kann.

Eine nicht dargestellte Steuereinrichtung des Futtermischers 2 schaltet das Getriebe 10 dabei nach Ablauf einer vorgegebenen oder vorgebbaren Zeitspanne.

Wenn das Drehmoment zum Drehen der Mischwerkzeuge 6 das Drehmoment übersteigt, dass das landwirtschaftliche Nutzfahrzeug über die Zapfstelle bereitstellen kann, sinkt die Drehzahl in der Antriebseinrichtung 8. Die Antriebseinrichtung 8 kann mit zumindest einem Drehzahlsensor versehen sein, der in Fig. 1 nicht dargestellt ist. Über den Drehzahlsensor wird diese Verringerung der Drehzahl erfasst. Die Steuereinrichtung des Futtermischers 2 schaltet dann das Getriebe 10 nach Möglichkeit so, dass es in eine Übersetzungsstufe geschaltet wird, die ein höheres Übersetzungsverhältnis aufweist. Hierdurch wird bei gleicher Drehzahl der Zapfstelle des landwirtschaftlichen Nutzfahrzeugs ein höheres Drehmoment für die Mischwerkzeuge 6 bereitgestellt. Die Mischwerkzeuge 6 drehen dabei langsamer.

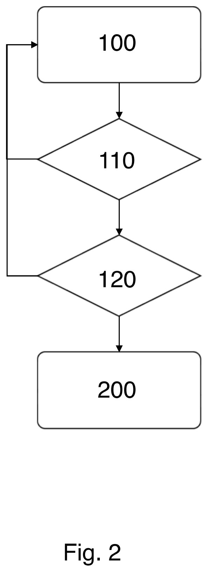

Die Figuren 2 bis 5 zeigen exemplarisch ein Ablaufdiagramm. Dieses Ablaufdiagramm zeigt, wie die Steuereinrichtung das Getriebe 10 schaltet, während der Mischbehälter 4 des Futtermischers 2 mit einzelnen Futterbestandteilen gefüllt und diese Futterbestandteile über die Mischwerkzeuge 6 vermischt werden. Zur besseren Übersichtlichkeit ist das Ablaufdiagramm in den Figuren 2 bis 5 in vier getrennten Abschnitten dargestellt. Jeder Abschnitt beginnt dabei mit dem Getriebe 10 in einem bestimmten Zustand. Die Teildiagramme gem. Fig. 2 bis Fig. 5 sind jedoch Bestandteil eines umfassenden großen Ablaufdiagramms und können zu einem solchen kombiniert werden.

Fig. 1 zeigt ein Ablaufdiagramm ausgehend von dem Getriebe 10 in dem Neutralgang 100. In dem Neutralgang 100 wird kein Drehmoment auf die Mischwerkzeuge 6 übertragen. Ein Motor zum Antreiben des Antriebseinrichtung 8, vorliegend die Zapfstelle des nicht dargestellten landwirtschaftlichen Nutzfahrzeuges, ist von den Mischwerkzeugen 6 entkoppelt.

Ausgehend von dem Getriebe 10 im Neutralgang wie in Punkt 100 dargestellt wird in einem Schritt 110 überprüft, ob die von dem Drehzahlsensor erfasste Drehzahl in einem vorgegebenen Bereich liegt, insbesondere größer als eine vorgegebene Minimaldrehzahl ist. Die Drehzahl wird dabei in der Antriebseinrichtung 8 vor dem Getriebe 10 oder im Bereich des Eingangs in das Getriebe 10 erfasst.

Wenn das Getriebe 10 mit hydraulisch schaltbaren Lamellenkupplungen versehen ist, kann zudem der Druck und die Temperatur einer Hydraulikflüssigkeit zum Schalten der Lamellenkupplungen überprüft werden. Wenn der Druck und die Temperatur der Hydraulikflüssigkeit innerhalb vorgegebener Grenzwerte liegen, wird in Schritt 120 überprüft, ob das Getriebe 10 geschaltet werden soll. Eine solche Schalteingabe kann von einem Bediener des Futtermischers über eine Bedieneinheit erfolgen, die mit der Steuereinheit verbunden ist.

Wenn in Schritt 110 festgestellt wird, dass die Drehzahl, die Temperatur oder der Druck der Hydraulikflüssigkeit außerhalb der vorgegebenen Grenzwerte liegen, verbleibt das Getriebe 10 in dem Neutralgang 100. Ein Schalten des Getriebes 10 ist so lange verhindert, bis sich die im Schritt 110 überprüften Parameter innerhalb der vorgegeben bzw. vorgebbaren Grenzwerte befinden.

Wenn in Schritt 120 festgestellt wird, dass kein Gangwechsel angefordert ist, verbleibt das Getriebe 10 im Neutralgang 100. Anderenfalls schaltet die Steuereinrichtung das Getriebe 10 am Anschluss an den Schritt 110 in die erste Übersetzungsstufe 200.

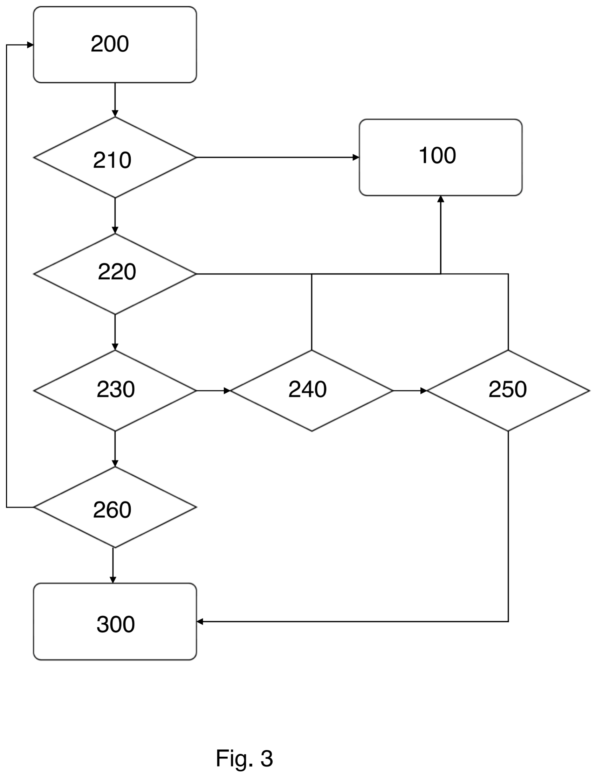

Das Flussdiagramm ausgehend von dem Getriebe 10 in der ersten Übersetzungsstufe 200 ist in Fig. 3 dargestellt. In Schritt 210 erfolgt zunächst wiederum eine Überprüfung, ob die Betriebsparameter wie die Drehzahl sowie die Temperatur und/oder der Druck einer Hydraulikflüssigkeit innerhalb vorgegebener Parameter liegen. In Schritt 210 kann nun zudem ein Schlupf der Lamellenkupplung im Getriebe 10 überprüft werden. Hierzu werden die Drehzahlen auf beiden Seiten der Kupplung erfasst. Wenn sich das Verhältnis der Drehzahlen innerhalb vorgegebener Toleranzen befindet bzw. die Differenz der Drehzahlen kleiner als ein vorgegebener Grenzwert ist, erfolgt in Schritt 220 eine Abfrage, ob ein Schalten des Getriebes 10 in den Neutralgang 100 gefordert ist. Wenn eine solche Schaltung im Schritt 220 angefordert ist, wird das Getriebe in den Neutralgang 100 geschaltet. Dasselbe erfolgt, wenn in Schritt 210 festgestellt wird, dass einer oder mehrere der überprüften Parameter außerhalb der vorgegebenen Grenzwerte liegen.

Wenn bei der Überprüfung in Schritt 220 keine Anforderung für einen Gangwechsel in den Neutralgang 100 festgestellt wird, wird in Schritt 230 überprüft, ob eine vorgegebene bzw. vorgebbare Zeitspanne abgelaufen ist. Diese Zeitspanne kann insbesondere von einem Bediener des Futtermischers 2 über die Bedieneinheit vorgegeben sowie ggf. auch angepasst werden. Wenn die vorgegebene Zeitspanne bereits abgelaufen ist, wird in Schritt 240 überprüft, ob das Getriebe 10 in den Neutralgang 100 geschaltet werden soll. Wenn dies der Fall ist, wird das Getriebe 10 in den Neutralgang 100 geschaltet. Anderenfalls erfolgt in Schritt 250 eine Überprüfung dahingehend, ob das Getriebe 10 in die zweite Übersetzungsstufe 300 geschaltet werden soll. Wenn dies der Fall ist, wird das Getriebe in die zweite Übersetzungsstufe 300 geschaltet. Anderenfalls wird das Getriebe in den Neutralgang 100 geschaltet.

Es kann somit vorgewählt werden, ob nach einer gewissen Zeit des Antriebs der Mischwerkzeuge 6 mit der ersten Übersetzungsstufe 200 der Mischvorgang beendet werden soll und das Getriebe in den Neutralgang 100 geschaltet werden soll oder nach Ablauf dieser Zeit in die zweite Übersetzungsstufe 300 hochgeschaltet werden soll.

Wenn in Schritt 230 festgestellt wird, dass die vorgegebene Zeitspanne noch nicht abgelaufen ist, wird in Schritt 260 überprüft, ob eine Anforderung zum Schalten des Getriebes 10 in die zweite Übersetzungsstufe 300 vorliegt. Ist dies nicht der Fall, bleibt das Getriebe in der ersten Übersetzungsstufe 200 und das Ablaufdiagramm der Figur 3 wird ausgehend von der ersten Übersetzungsstufe 200 erneut durchlaufen. Wenn im Schritt 260 eine Anforderung für einen Gangwechsel in die zweite Übersetzungsstufe 300 festgestellt wird, schaltet die Steuereinrichtung das Getriebe 10 in die zweite Übersetzungsstufe 300.

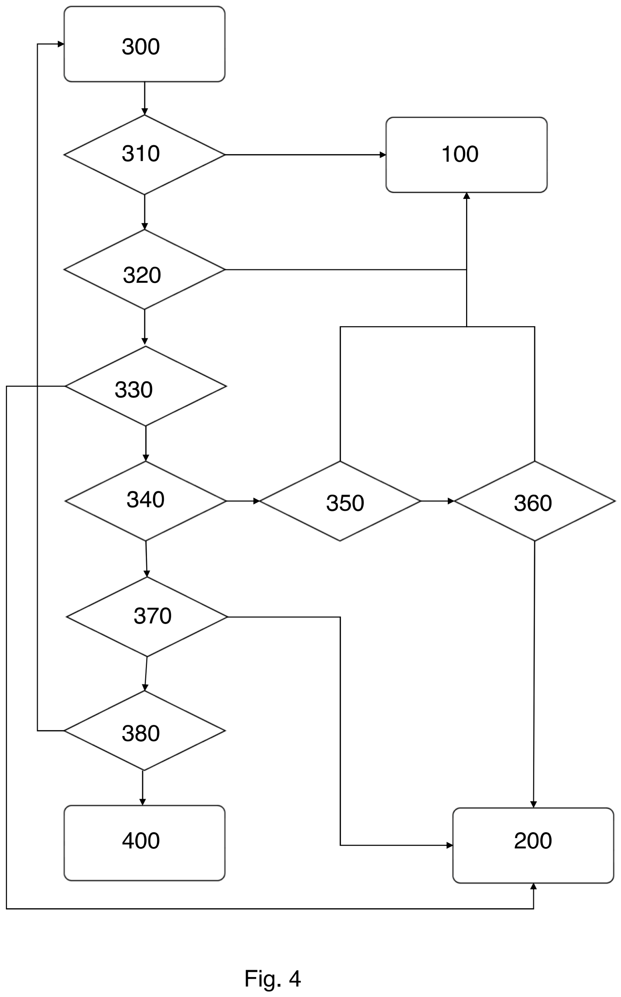

Fig. 4 zeigt das Ablaufdiagramm ausgehend von dem Getriebe 10 in der zweiten Übersetzungsstufe 300. Im Schritt 310 erfolgt erneut eine Überprüfung, ob sich die Betriebsparameter Schlupf, Drehzahlen, Temperatur und/oder Druck innerhalb vorgegebener bzw. vorgebbarer Parameter befinden. Ist dies nicht der Fall, wird das Getriebe 10 in den Neutralgang 100 versetzt. Im Schritt 320 wird geprüft, ob eine Schaltanforderung zum Schalten in den Neutralgang 100 vorliegt. Wenn dies der Fall ist, wird das Getriebe 10 in den Neutralgang 100 geschaltet. Anderenfalls wird in Schritt 330 geprüft, ob die Drehzahl während einer vorgegebenen Zeitspanne um einen vorgegebenen Prozentsatz von einer vorgegebenen Drehzahl bspw. einer Anfangsdrehzahl abweicht. Wenn ein Abfall der Drehzahl erfasst wird, schaltet die Steuereinrichtung das Getriebe 10 in die erste Übersetzungsstufe 200.

Andernfalls wird in Schritt 340 überprüft, ob eine vorgegebene bzw. vorgebbare Zeitspanne abgelaufen ist. Wenn dies der Fall ist, wird in Schritt 350 überprüft, ob da Getriebe 10 nach Ablauf der Zeitspanne in den Neutralgang 100 geschaltet werden soll. Ist dies der Fall, wird das Getriebe in den Neutralgang 100 versetzt. Anderenfalls wird in Schritt 360 geprüft, ob eine Anforderung zum Schalten des Getriebes in die erste Übersetzungsstufe 200 vorliegt. Wenn dies der Fall ist, wird das Getriebe 10 in die erste Übersetzungsstufe 200 geschaltet. Anderenfalls schaltet die Steuereinrichtung das Getriebe 10 in den Neutralgang 100.

Wenn in Schritt 340 festgestellt wird, dass die vorgegebene Zeitspanne noch nicht abgelaufen ist, wird in Schritt 370 überprüft, ob eine Anforderung zum Schalten des Getriebes 10 in die erste Übersetzungsstufe 200 vorliegt. Wenn dies der Fall ist, wird das Getriebe 10 in die erste Übersetzungsstufe 200 geschaltet. Ist dies nicht der Fall, erfolgt eine Überprüfung, ob eine Anforderung zum Schalten des Getriebes in die dritte Übersetzungsstufe 400 vorliegt. Wenn dies der Fall ist, schaltet die Steuereinrichtung das Getriebe 10 in die dritte Übersetzungsstufe 400. Anderenfalls verbleibt das Getriebe in der zweiten Übersetzungsstufe 300 und das Ablaufdiagramm gem. Fig. 4 wird erneut durchlaufen.

In Fig. 4 ist beschrieben, dass die Steuereinrichtung ausgehend von der zweiten Übersetzungsstufe 300 das Getriebe 10 automatisch in eine erste Übersetzungsstufe 200 schaltet, wobei die erste Übersetzungsstufe 200 ein höheres Übersetzungsverhältnis aufweist als die zweite Übersetzungsstufe 300. Dieser Schaltvorgang erfolgt basierend auf den Signalen eines Drehzahlsensors. Alternativ oder zusätzlich können Signale eines Drehmomentsensors den Schaltvorgang auslösen. Die Überprüfung in Schritt 330, ob die Drehzahl die in einer vorgegebenen Zeitspanne um einen vorgegebenen Prozentsatz von einer vorgegebenen Drehzahl abweicht, ist nur dann sinnvoll, wenn sich das Getriebe 10 in einer Übersetzungsstufe befindet, von der aus das Getriebe 10 in eine andere Übersetzungsstufe mit einem höheren Übersetzungsverhältnis geschaltet werden kann.

In Fig. 3 erfolgt in Schritt 210 ebenfalls eine Überprüfung der Drehzahl. Wenn dabei eine vorgegebene Minimaldrehzahl unterschritten wird, kann das Getriebe 10 nicht weiter in eine Übersetzungsstufe mit einem höheren Übersetzungsverhältnis geschaltet werden. Stattdessen wird das Getriebe 10 dann von der Steuereinrichtung in den Neutralgang 100 versetzt, in dem die Mischwerkzeuge 6 nicht länger angetrieben sind.

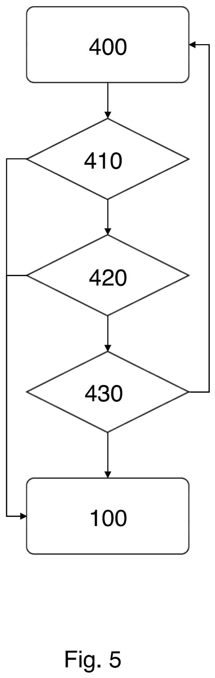

Fig. 5 zeigt ein Ablaufdiagramm ausgehend von dem Getriebe 10 in der dritten Übersetzungsstufe 400. Im Schritt 410 erfolgt wiederum eine Überprüfung der Parameter. Sollte einer oder mehr der Parameter außerhalb der vorgegebenen Grenzwerte liegen, schaltet die Steuereinrichtung das Getriebe 10 in den Neutralgang 100. Anderenfalls wird in Schritt 420 überprüft, ob eine Anforderung zum Schalten des Getriebes 10 in den Neutralgang 100 vorliegt. Wenn dies der Fall ist, wird das Getriebe 10 in den Neutralgang 100 geschaltet. Anderenfalls erfolgt in Schritt 430 eine Prüfung dahin, ob eine vorgegebene Zeitspanne abgelaufen ist. Wenn dies der Fall ist, wird das Getriebe 10 ebenfalls von der Steuereinrichtung in den Neutralgang 100 geschaltet. Anderenfalls verbleibt das Getriebe 10 in der dritten Übersetzungsstufe 400 und das Ablaufdiagramm nach Fig. 5 wird erneut durchlaufen.

Das exemplarische Ablaufdiagramm geht davon aus, dass der Mischvorgang spätestens dann endet, wenn das Getriebe 10 in die dritte Übersetzungsstufe 400 geschaltet wurde und dort für eine gewisse Zeit verblieben ist. Gangwechsel zurück in die zweite Übersetzungsstufe 300 oder erste Übersetzungsstufe 100 sind bei diesem Ablaufdiagramm nicht vorgesehen. Beim Abschluss des Mischvorgangs wird das Getriebe 10 stets in den Neutralgang 100 geschaltet.

Es sind jedoch auch andere Ablaufdiagramme denkbar, bei denen das Getriebe 10 beispielsweise zunächst in die zweite Übersetzungsstufe 300 geschaltet ist.

Es kann auch ein Ablaufprogramm vorgesehen sein, bei dem der Futtermischer 2 ausgehend von dem Neutralgang 100 oder direkt mit dem Getriebe in der dritten Übersetzungsstufe 400 mit niedrigem Übersetzungsverhältnis betrieben wird und zeitgesteuert in die zweite Übersetzungsstufe 300 und die erste Übersetzungsstufe 200 mit steigendem Übersetzungsverhältnis geschaltet wird. Dies ist dann sinnvoll, wenn das zum Bewegen der Mischwerkzeuge 6 benötigte Drehmoment im Laufe der Zeit ansteigt. Dies ist regelmäßig während eines Beladevorgangs des Futtermischers 2 der Fall. Der zunächst leere Mischbehälter 4 wird dabei schrittweise mit unterschiedlichen Futterkomponenten beladen. Mit steigender Beladung steigt das zum Drehen der Mischwerkzeuge 6 benötigte Drehmoment. Zunächst kann eine geringe Menge an Futter mit hoher Drehzahl und niedrigem Drehmoment mit dem Getriebe in der dritten Übersetzungsstufe 400 durchmischt werden, um schnell eine gute Durchmischung zu erhalten. Im weiteren Verlauf wird die Drehzahl der Mischwerkzeuge 6 gesenkt, in dem das Getriebe 10 in die zweite Übersetzungsstufe 300 und die erste Übersetzungsstufe 200 mit jeweils höherem Übersetzungsverhältnis geschaltet wird.

Auch ein solches Mischprogramm kann vorsehen, das Getriebe 10 nach Ablauf einer maximalen Mischzeit in den Neutralgang 100 zu schalten.

Schaltanforderungen können in einem in der Steuereinrichtung ablaufenden Mischprogramm veränderlich oder unveränderlich vorgegeben sein oder durch einen Bediener erfolgen, insbesondere über eine Bedieneinheit des Futtermischers 2.

## Patentansprüche

1. Futtermischer (2) mit einem Mischbehälter (4) zur Aufnahme von Futter, wenigstens einem im Mischbehälter (4) drehend angeordneten Mischwerkzeug (6), einer Antriebseinrichtung (8) zum Antreiben des Mischwerkzeugs (6), die ein automatisch schaltbares Getriebe (10) mit einer ersten Übersetzungsstufe (200) mit einem hohen Übersetzungsverhältnis und wenigstens einer zweiten Übersetzungsstufe (300) mit einem niedrigeren Übersetzungsverhältnis als die erste Übersetzungsstufe (200) umfasst, wobei das Getriebe (10) als Lastschaltgetriebe ausgebildet ist, sowie mit einer Steuereinrichtung zum Schalten des Getriebes (10), **dadurch gekennzeichnet, dass** die Steuereinrichtung eingerichtet ist, das Getriebes (10) nach Ablauf einer vorgegebenen oder vorgebbaren Zeitspanne zu schalten.

2. Futtermischer nach Anspruch 1, **dadurch gekennzeichnet, dass** das Getriebe (10) eine dritte Übersetzungsstufe (400) aufweist und die Steuereinrichtung eingerichtet ist, das Getriebes (10) gemäß einem vorgegebenen oder vorgebbaren Mischprogramm zeitabhängig zwischen den verschiedenen Übersetzungsstufen zu schalten.

3. Futtermischer nach Anspruch 2, **dadurch gekennzeichnet, dass** die Steuereinrichtung eingerichtet ist, das Getriebe (10) zunächst in der ersten Übersetzungsstufe (200) zu betreiben und nach Ablauf einer ersten Zeitspanne in die zweite Übersetzungsstufe (300) und nach Ablauf einer zweiten Zeitspanne in die dritte Übersetzungsstufe (400) zu schalten.

4. Futtermischer nach Anspruch 2, **dadurch gekennzeichnet, dass** die Steuereinrichtung eingerichtet ist, das Getriebe (10) zunächst in der dritten Übersetzungsstufe (400) zu betreiben und nach Ablauf einer ersten Zeitspanne in die zweite Übersetzungsstufe (300) und nach Ablauf einer zweiten Zeitspanne in die erste Übersetzungsstufe (200) zu schalten.

5. Futtermischer nach einem der vorhergehenden Ansprüche, **dadurch gekennzeichnet, dass** die Antriebseinrichtung (8) einen Drehzahlsensor oder einen Drehmomentsensor aufweist, wobei die Steuereinrichtung ausgebildet ist, das Getriebe (10) unabhängig von der vorgegebenen oder vorgebbaren Zeitspanne in ein niedrigeres oder höheres Übersetzungsverhältnis zu schalten, sofern ein solches vorhanden ist, wenn die vom Drehzahlsensor erfasste Drehzahl während eines vorbestimmten Zeitraums um einen vorbestimmten Betrag abfällt bzw. ansteigt oder das vom Drehmomentsensor erfasste Drehmoment während eines vorbestimmten Zeitraums einen vorbestimmten Betrag übersteigt bzw. unterschreitet.

6. Futtermischer nach einem der vorhergehenden Ansprüche, **dadurch gekennzeichnet, dass** das Getriebe (10) einen Neutralgang (100) aufweist und die Steuereinrichtung eingerichtet ist, das Getriebe (10) nach Ablauf einer vorgegebenen maximalen Mischzeit in den Neutralgang (100) zu schalten.

7. Futtermischer nach Anspruch 5 und Anspruch 6, **dadurch gekennzeichnet, dass** die Steuereinrichtung eingerichtet ist, das Getriebe (10) in den Neutralgang zu schalten, wenn die von dem Drehzahlsensor erfasste Drehzahl während des vorbestimmten Zeitraums um den vorbestimmten Betrag abfällt bzw. das vom Drehmomentsensor erfasst Drehmoment während des vorbestimmten Zeitraums den vorbestimmten Betrag überschreitet und das Getriebe (10) in die erste Übersetzungsstufe (200) geschaltet ist.

8. Futtermischer nach einem der vorhergehenden Ansprüche, **dadurch gekennzeichnet, dass** das Getriebe (10) als Stirnradgetriebe mit hydraulisch schaltbaren Lamellenkupplungen ausgebildet ist, wobei das Getriebe (10) zumindest einen Druck- und/oder Temperatursensor zur Messung des Drucks und/oder der Temperatur einer hydraulischen Flüssigkeit zum Betätigen der Lamellenkupplung aufweist, der mit der Steuereinheit verbunden ist, wobei die Steuereinrichtung eingerichtet ist, ein Umschalten des Getriebes (10) in eine Übersetzungsstufe mit einem höheren oder niedrigeren Übersetzungsverhältnis zu verhindern, wenn die von dem Druck- und/oder Temperatursensor erfassten Messwerte bezüglich des Drucks und/oder der Temperatur der hydraulischen Flüssigkeit einen vordefinierten unteren Grenzwert und/oder einen vordefinierten oberen Grenzwert erreichen bzw. unterschreiten.

9. Futtermischer nach Anspruch 8 und einem der Ansprüche 6 oder 7, **dadurch gekennzeichnet, dass** die Steuereinrichtung eingerichtet ist, das Getriebe 10 in den Neutralgang (100) zu schalten, wenn die von dem Druck- und/oder Temperatursensor erfassten Messwerte bezüglich des Drucks und/oder der Temperatur der hydraulischen Flüssigkeit einen vordefinierten unteren Grenzwert und/oder einen vordefinierten oberen Grenzwert erreichen bzw. unterschreiten.

10. Futtermischer nach einem der vorhergehenden Ansprüche, **dadurch gekennzeichnet, dass** der Futtermischer eine mit der Steuereinrichtung verbundene Bedieneinheit aufweist, mittels derer ein Bediener des Futtermischers eine Schalteingabe an die Steuereinrichtung übermitteln kann, wobei die Steuereinrichtung eingerichtet ist, das Getriebe (10) auf eine Schalteingabe eines Bedieners auch vor Ablauf der vorgegebenen oder vorgebbaren Zeitspanne zu schalten.

11. Verfahren zum Mischen von Futter mit einem Futtermischer (2) nach einem der Ansprüche 1 bis 10, **dadurch gekennzeichnet, dass** das Mischwerkzeug (6) über die Antriebseinrichtung (8) in Drehung versetzt wird und die Steuereinrichtung das Getriebe (10) nach Ablauf der vorgegebenen oder vorgebbaren Zeitspanne schaltet.

12. Verfahren nach Anspruch 11 zum Mischen von Futter mit einem Futtermischer nach einem der Ansprüche 4, 7 oder 9, **dadurch gekennzeichnet, dass** eine von dem Drehzahlsensor aufgenommene Anfangsdrehzahl als Arbeitsdrehzahl gespeichert wird, der Mischbehälter (4) mit Futter beladen wird, wobei der Drehzahlsensor während der Beladung jeweils Ist-Drehzahlen aufnimmt und ein Vergleich der jeweiligen Ist-Drehzahlen mit der Anfangsdrehzahl erfolgt, wobei die Steuereinrichtung das Getriebe (10) automatisch in eine andere Übersetzungsstufe schaltet, wenn die Ist-Drehzahlen innerhalb eines vorbestimmten Zeitraums um einen vorbestimmten Prozentsatz von der Arbeitsdrehzahl abweichen.

13. Verfahren nach Anspruch 11 oder Anspruch 12 zum Mischen von Futter mit einem Futtermischer (2) nach einem der Ansprüche 6, 7 oder 9, **dadurch gekennzeichnet, dass** die Steuereinrichtung das Getriebe (10) nach Ablauf einer voreinstellbaren maximalen Mischzeit in den Neutralgang (100) schaltet.

14. Verfahren nach Anspruch 13 zum Mischen von Futter mit einem Futtermischer (2) nach einem der Ansprüche 8 oder 9, **dadurch gekennzeichnet, dass** der Futtermischer (2) zumindest einen weiteren, an der Antriebseinrichtung (8) angeordneten Drehzahlsensor und/oder einen Drucksensor und/oder einen Temperatursensor aufweist, wobei die Steuereinrichtung das Getriebe (10) in den Neutralgang (100) schaltet, wenn das Verhältnis der vom Drehzahlsensor aufgenommenen Drehzahl und der vom weiteren Drehzahlsensor aufgenommenen Drehzahl und/oder deren Differenz und/oder ein vom Drucksensor aufgenommener Druck und/oder eine von dem Temperatursensor aufgenommene Temperatur einen vorgegebenen Maximalwert überschreitet und/oder einen vorgegebenen Minimalwert unterschreitet.
